# EUROPÄISCHE PATENTANMELDUNG

(11) **EP 1 466 658 A1**
(43) Veröffentlichungstag der Anmeldung: **13.10.2004**
(21) Anmeldenummer: 03405249.8
(22) Anmeldetag: 11.04.2003
(51) Int. Cl.: B01D 65/08, B01D 63/08, B01D 61/18, C02F 1/44

(54) **Belüftungsvorrichtung und Belüftungsverfahren für Membranfilter**

(71) Anmelder: UTISOL Technologies AG, 6304 Zug (CH)
(72) Erfinder:
(74) Vertreter: Frei, Alexandra Sarah

(57) **Zusammenfassung**

Eine Belüftungsvorrichtung (1) zur Beseitigung von filtrationshemmenden Ablagerungen an Membranfiltern weist einen Mischraum (3) auf, der seitlich durch Kastenwände und nach unten durch ein Mittel zur Lufteinbringung (8) begrenzt ist, wobei die Kastenwände oberhalb des Mittels zur Lufteinbringung Durchbrüche (6a,6b) zur Zuführung der zu filternden Flüssigkeit in den Mischraum (3) aufweisen.

Das Mittel zur Lufteinbringung (8) bildet eine Begrenzung des gesamten Mischraums (3) nach unten. Dadurch wird die Flüssigkeit oberhalb des Mischraums (3) in diesen geleitet und erfährt dadurch eine verstärkte Verwirbelung als dies bei einer Umspülung geschehen würde. Dank dieser Verwirbelung werden Flüssigkeit und Luft besser gemischt, wodurch eine Bauhöhe der Belüftungsvorrichtung (1) vergleichsweise klein gehalten werden kann.

In einer bevorzugten Ausführungsform der Erfindung ist das Mittel zur Lufteinbringung gegen unten offen ausgebildet, also ohne Bodenwand. Dadurch können sich keine Verschmutzungen auf einer solchen Bodenwand ablagern.

## Beschreibung

Die Erfindung bezieht sich auf das Gebiet der Filtertechnik, insbesondere auf eine Belüftungsvorrichtung und ein Belüftungsverfahren zur Beseitigung von filtrationshemmenden Ablagerungen an Membranfiltern gemäss dem Oberbegriff der Patentansprüche 1 und 9.

### STAND DER TECHNIK

Derartige Belüftungsvorrichtungen und Verfahren werden beispielsweise in Filteranlagen für Abwasser oder Trinkwasser verwendet. Dabei sind plattenförmige Filterlamellen oder Filterplatten von Membranfiltern in eine zu filternde Flüssigkeit getaucht. Um die Bildung von Ablagerungen an den Filtern zu verhindern, sind die Filtermembranen im Betrieb senkrecht angeordnet und wird unterhalb der Filtermembranen Luft in die Flüssigkeit eingebracht. Das entstehende Luft-Flüssigkeitsgemisch steigt zwischen den Filterlamellen auf, wobei die Luftblasen ein Anhaften von Schmutzpartikeln an den Filtermembranen verhindern.

Solche Vorrichtungen sind beispielsweise in der EP-A-0 937 494, und der Zusammenfassung der JP-A-07275669 offenbart. Darin sind unterhalb von Filtereinheiten, welche die Filterplatten aufweisen, gelochte Rohre zur Lufteinbringung angeordnet. Ein Anströmkasten umschliesst die Rohre und ein darübergelegenes Flüssigkeitsvolumen, in welchem sich die Luft mit dem Wasser mischen und über eine untere Fläche der Filtereinheiten verteilen kann.

Im Betrieb bekannter Vorrichtungen stellt sich das Problem einer Verschlammung insbesondere der Rohre: Wird die Belüftung dauernd betrieben, so trocknen an luftumspülten Stellen entstandene Ansammlungen von Schmutzpartikeln aus und verhärten sich. Wird die Belüftung intermittierend betrieben, so verschlammen die Rohre und müssen mit zusätzlichen Spülverfahren und entsprechenden technischen Mitteln gereinigt werden.

### DARSTELLUNG DER ERFINDUNG

Es ist Aufgabe der Erfindung, eine Belüftungsvorrichtung und ein Belüftungsverfahren für Membranfilter der eingangs genannten Art zu schaffen, welche unempfindlich gegenüber Verschmutzungen sind und eine einfache Bauweise aufweisen.

Diese Aufgabe lösen eine Belüftungsvorrichtung und ein Belüftungsverfahren für Membranfilter mit den Merkmalen der Patentansprüche 1 und 9.

Die Belüftungsvorrichtung weist also einen Mischraum auf, der seitlich durch Kastenwände und nach unten durch ein Mittel zur Lufteinbringung begrenzt ist, wobei die Kastenwände oberhalb des Mittels zur Lufteinbringung Durchbrüche zur Zuführung der zu filternden Flüssigkeit in den Mischraum aufweisen.

Hier und im Folgenden beziehen sich Bezeichnungen wie "unterhalb", "oberhalb", "seitlich" etc.... auf die Lage der Belüftungsvorrichtung im Betriebszustand.

Das Mittel zur Lufteinbringung ist also nicht ein Rohr, welches seitlich durch die Flüssigkeit umspült wird, sondern bildet eine Begrenzung des gesamten Mischraums nach unten. Dadurch wird die Flüssigkeit oberhalb des Mischraums in diesen geleitet und erfährt dadurch eine verstärkte Verwirbelung als dies bei einer Umspülung geschehen würde. Dank dieser Verwirbelung wird die Flüssigkeit durch die aufströmende Luft besser eingesaugt, wodurch eine Bauhöhe der Belüftungsvorrichtung vergleichsweise klein gehalten werden kann.

Da das Mittel zur Lufteinbringung den gesamten Mischraum nach unten begrenzt und dabei vorzugsweise im wesentlichen die gleiche Ausdehnung oder Fläche wie eine Unterseite eines oben am Mischraum anordenbaren Filterelements aufweist, kann Luft über die ganze untere Fläche des Mischraums eingebracht werden. Dadurch wird ebenfalls eine rasche Durchmischung von Luft und Flüssigkeit möglich und eine geringere Bauhöhe erforderlich.

Die Durchbrüche sind vorzugsweise jeweils durch einen über die jeweilige Kastenwand vorstehenden Stutzen oder Kragen oder Anströmkopf umschlossen. Dadurch wird verhindert, dass aufsteigende Luft durch die Durchbrüche aus dem Mischraum entweicht. Ein Stutzen kann auch nur eine Oberseite eines Durchbruchs umrahmen.

In einer bevorzugten Ausführungsform der Erfindung ist das Mittel zur Lufteinbringung gegen unten offen ausgebildet, also ohne Bodenwand. Dadurch können sich keine Verschmutzungen auf einer solchen Bodenwand ablagern. Bei einem intermittierenden Betrieb füllt sich das Mittel zur Lufteinbringung sofort mit Flüssigkeit. Dadurch können Ablagerungen nicht eintrocknen.

Durch eine bevorzugte quaderförmige Konstruktion ist die Belüftungsvorrichtung einfach herzustellen. Durch den offenen Aufbau von Mischraum und insbesondere des Mittels zur Lufteinbringung ist sie auch bei einer periodischen manuellen Revision einfach zu kontrollieren und zu reinigen.

Im Betrieb gemäss dem erfinderischen Verfahren wird Luft in das Mittel zur Lufteinbringung gepumpt. Es bildet sich zwischen Oberseite und Seitenwänden des Mittels zur Lufteinbringung ein Luftpolster, das an seiner Unterseite keine mechanischen Trennmittel zwischen Luft und Flüssigkeit aufweist. Aus dem Luftpolster strömt Luft durch Öffnungen oder Düsen in der Oberseite, die einen Boden des Mischraums bildet, in den Mischraum. Die aufwärts strömende Luft zieht Flüssigkeit durch die oberhalb des Mittels zur Lufteinbringung angeordneten Durchbrüche in Seitenwänden des Mischraums. In einem oberen Teil des Mischraums bildet sich ein Gemisch von Luft und Flüssigkeit, welches durch das Filter nach oben strömt.

Die Erfindung wird vorzugsweise zur Mischung von verunreinigtem Wasser mit Luft verwendet, insbesondere in einer Filteranlage für Trinkwasser oder Abwasser. In diesem Fall liegt als Flüssigkeit Wasser vor. Der Einfachheit halber ist in der vorliegenden Beschreibung die Rede von Wasser und Luft, aber ohne dass die Erfindung auf diese eingeschränkt ist: In anderen Anwendungen können auch andere Flüssigkeiten statt Wasser, und/oder statt Luft irgendwelche Gase oder Gasgemische verwendet werden.

Die Erfindung wurde im Zusammenhang mit plattenförmigen Membranfiltern erklärt, funktioniert aber in derselben Weise auch mit anders geformten, beispielsweise flexiblen oder starren, rohrförmigen oder flachen oder bandförmigen Filterelementen.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: einen Querschnitt durch eine Belüftungsvorrichtung gemäss der Erfindung, mit einer aufgesetztem Filtereinheit;
- Figur 2: Ansichten einer weiteren Ausführungsform der Erfindung;
- Figur 3: eine perspektivische Ansicht einer Belüftungsvorrichtung gemäss der Erfindung mit aufgesetzter Filtereinheit; und
- Figur 4: eine perspektivische Ansicht mehrerer zusammengesetzter Einheiten gemäss Figur 3.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

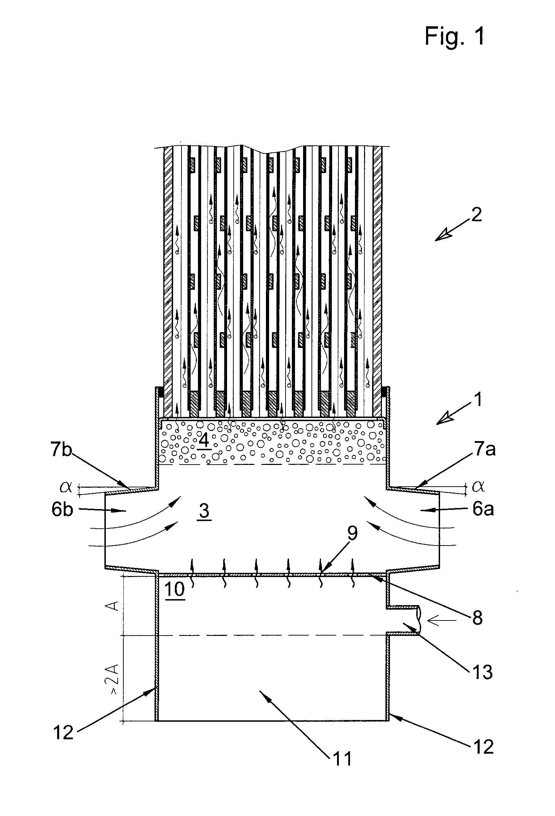

Figur 1 zeigt einen Querschnitt durch eine Belüftungsvorrichtung 1 gemäss der Erfindung, mit einer aufgesetztem Filtereinheit 2. Die Belüftungsvorrichtung 1 weist vertikale Begrenzungselemente oder Kastenwände 5 auf, die an mindestens einer Seite einen oder mehrere Durchbrüche oder Anströmöffnungen 6a,6b aufweisen. Die Anströmöffnungen 6a,6b sind vorzugsweise mit Stutzen oder Kragen oder Anströmköpfen 7a,7b versehen. Die Kastenwände 5 bilden respektive begrenzen eine Diffusorkammer respektive einen Mischraum 3. Eine obere Begrenzung des Mischraums 3 entspricht einer Unterseite der Filtereinheit 2, eine untere Begrenzung des Mischraums wird durch eine Bodenplatte 8 gebildet, welche Teil eines Mittels zu Luft- respektive Gaseinbringung ist. Die Bodenplatte 8 weist Löcher oder Luftdüsen 9 auf. Die Bodenplatte 8 bildet eine obere Begrenzung, und Luftkammerwände 12 bilden eine seitliche Begrenzung einer Luftkammer 11 des Mittels zur Lufteinbringung. Die Luftkammer 11 ist durch eine Luftzufuhrleitung 13 mit Luft oder einem anderen Gasgemisch versorgbar. Die Luftkammer 11 ist vorzugsweise gegen unten offen, weist also keine der Bodenplatte 8 gegenüberliegende Begrenzungswand auf.

Im Betrieb der Belüftungsvorrichtung 1 wird sie, mit einer oder mehreren darüber angeordneten Filtereinheiten 2, vollständig in die zu filternde Flüssigkeit eingetaucht. An abgehende Permeatsleitungen 14 der Filtereinheiten 2 wird ein Unterdruck erzeugt, und es wird Luft durch die Luftzufuhrleitung 13 in die Luftkammer 11 gepumpt. Es bildet sich ein Luftpolster 10 unter der Bodenplatte 8, aus welchem die Luft durch die Luftdüsen 9 in den Mischraum 3 strömt. Die aufströmende Luft reisst Flüssigkeit durch die Anströmöffnungen 6a,6b mit und vermischt sich mit ihr, so dass in einem oberen Bereich des Mischraums 3 ein Luft-Wassergemisch 4 gebildet wird. Dieses strömt durch die Filtereinheit 2 weiter nach oben. Die Anströmköpfe 7a,7b verhindern, dass Luft den Mischraum 3 durch die Anströmöffnungen 6a,6b verlässt. Diese Wirkung wird verbessert, wenn eine nach aussen vorstehende obere Begrenzung der Anströmköpfe 7a,7b nach unten geneigt ist. Ein bevorzugter Neigungswinkel α beträgt mindestens 5 oder 15 oder 20 Grad, vorzugsweise mindestens annähernd 10 Grad. Eine optional vorhandene untere Begrenzung der Anströmköpfe kann im ungefähr gleichen Neigungswinkel nach oben geneigt sein.

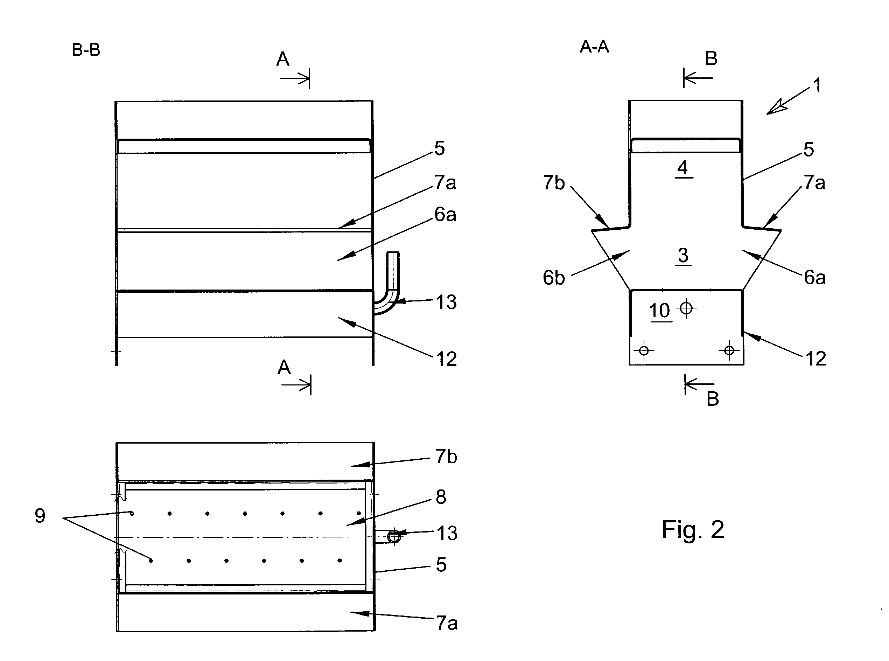

Figur 2 zeigt drei korrespondierende Ansichten einer weiteren Ausführungsform der Erfindung. In dieser Ausführungsform bilden die Anströmköpfe 7a,7b nur eine obere und teilweise eine seitliche Umrahmung der Anströmöffnungen 6a,6b.

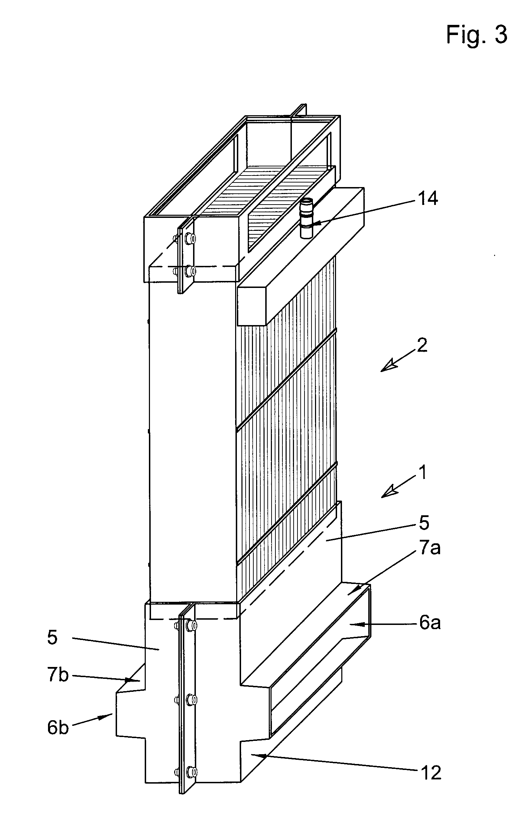

Figur 3 zeigt eine perspektivische Ansicht einer Belüftungsvorrichtung 1 gemäss der Erfindung mit aufgesetzter Filtereinheit. Die Belüftungsvorrichtung 1 wird dabei durch einen im wesentlichen quaderförmigen Mischraum 3 mit zwei längeren und zwei kürzeren Kastenwänden 5, und der darunterliegenen Luftkammer 11 mit im wesentlichen gleichen horizontalen Ausdehnungen gebildet. Die längeren Kastenwände 5 weisen rechteckförmige Anströmöffnungen 6a,6b mit entsprechenden Anströmköpfen 7a,7b auf.

Beispielhaft sind im Folgenden Masse für eine Ausführungsform der Erfindung angegeben. Die Masse können aber auch um beispielsweise das Zweifache oder mehr variiert werden: Höhe der Belüftungsvorrichtung 1: ca. 21 cm; horizontale Ausdehnung des Kastens: ca. 12 mal 28 cm; Höhe der Anströmöffnungen 6: ca. 6.5 cm; Durchmesser der Luftdüsen 9: ca. 2 bis 4 mm, entsprechend einem Abstand zwischen Platten des Membranfilters; Höhe der Luftkammerwand 12: ab ca 5cm, je nach vorgesehener Einsatztiefe der Belüftungsvorrichtung 1. Die Luftzufuhrleitung 13 ist vorzugsweise in einem oberen Drittel der Luftkammerwand 12 angeschlossen, wie in der Figur 1 durch das Mass A angedeutet ist.

Ein erster Kragen oder Anströmkopf 7a weist vorzugsweise eine kleinere respektive engere äussere Öffnung als ein zweiter Anströmkopf 7a. Damit ist der erste Anströmkopf 7a einer ersten Belüftungsvorrichtung 1 in einen zweiten Anströmkopf 7b einer zweiten Belüftungsvorrichtung 1 steckbar.

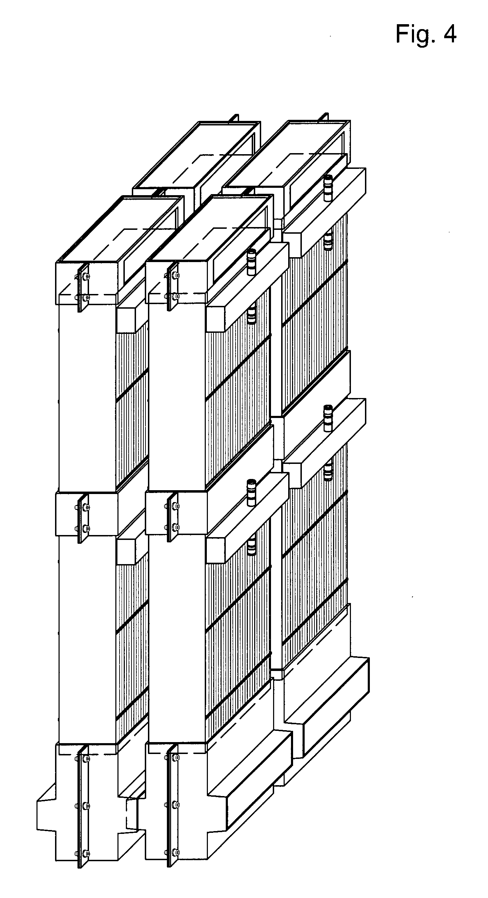

Zusammen mit nicht gezeigten Verbindungen zwischen Filtereinheiten 2 kann somit in einfacher Weise eine stabile Verbindung zwischen den zwei Belüftungsvorrichtungen 1 und zugeordneten Filtereinheiten 2 erstellt werden. Figur 4 zeigt eine perspektivische Ansicht mehrerer solcher zusammengesetzter Einheiten.

### BEZUGSZEICHENLISTE

- 1: Belüftungsvorrichtung
- 2: Filtereinheit
- 3: Mischraum
- 4: Luft-Wassergemisch
- 5: Kastenwand
- 6: Anströmöffnung
- 7: Anströmkopf
- 8: Bodenplatte
- 9: Luftdüse
- 10: Luftpolster
- 11: Luftkammer
- 12: Luftkammerwand
- 13: Luftzufuhrleitung
- 14: Permeatleitung

## Patentansprüche

1. Belüftungsvorrichtung zur Beseitigung von filtrationshemmenden Ablagerungen an Membranfiltern, insbesondere zur Filterung von Wasser, wobei die Belüftungsvorrichtung (1) vorgesehen ist, in einer zu filternden Flüssigkeit eingetaucht betrieben zu werden, und die Belüftungsvorrichtung (1) Mittel zum Einbringen eines gasförmigen Mediums in die zu filternde Flüssigkeit aufweist, und einen Mischraum (3) aufweist, der seitlich durch Kastenwände (5) begrenzt ist, **dadurch gekennzeichnet,**
**dass** der Mischraum (3) nach unten durch ein Mittel zur Lufteinbringung (8) begrenzt ist und die Kastenwände (5) oberhalb des Mittels zur Lufteinbringung (8) mindestens einen Durchbruch (6a,6b) zur Zuführung der zu filternden Flüssigkeit in den Mischraum (3) aufweisen..

2. Vorrichtung nach Anspruch 1, wobei dass das Mittel zur Lufteinbringung eine mit Löchern (9) versehene Bodenplatte (8) aufweist, welche den Mischraum (3) nach unten begrenzt.

3. Vorrichtung nach Anspruch 1 oder 2, wobei das Mittel zur Lufteinbringung nach unten offen ist.

4. Vorrichtung nach einem der Ansprüche 1 bis 3, wobei der mindestens eine Durchbruch (6a,6b) zumindest an seiner oberen Begrenzung einen vorstehenden Kragen aufweist, der in Betriebsposition der Belüftungsvorrichtung (1) von der jeweiligen Kastenwand (5) ausgehend in einem Winkel mindestens 10 Grad nach unten verläuft.

5. Vorrichtung nach Anspruch 4, wobei der mindestens eine Durchbruch (6a,6b) einen umlaufenden und sich nach aussen verengenden Kragen (7a,7b) aufweist.

6. Vorrichtung nach Anspruch 5, wobei ein erster Durchbruch (6a) mit einem ersten Kragen (7a) auf einer Seite des Mischraums (3) und ein zweiter Durchbruch (6b) mit einem zweiten Kragen (7b) auf einer gegenüberliegenden Seite des Mischraums (3) angeordnet sind und der erste Kragen (7a) enger als der zweite Kragen (7b) geformt ist.

7. Vorrichtung nach einem der Ansprüche 2 bis 6, wobei der durch die Kastenwände (5) und die Bodenplatte (8) begrenzte Mischraum (3) im wesentlichen quaderförmig ist.

8. Vorrichtung nach einem der Ansprüche 1 bis 7, wobei die Durchbrüche (6) rechteckig geformt sind.

9. Verfahren zur Belüftung eines Membranfilters (2), in welchem eine Filtereinheit (2) von einem Gas-Flüssigkeitsgemisch durchströmt wird, und dazu das Gas mit der Flüssigkeit in einem Mischraum (3) vermischt wird, welcher in die zu filternde Flüssigkeit eingetaucht ist, **dadurch gekennzeichnet,**
**dass** das Gas durch eine untere Begrenzung (8) des Mischraums (3) in diesen eingebracht wird, aufwärts strömt und dadurch die Flüssigkeit durch Durchbrüche (6a,6b) in Seitenwänden des Mischraum (3) nach oben zieht.

10. Verfahren nach Anspruch 9, wobei das Gas in einer unterhalb des Mischraums (3) befindlichen und nach unten offenen Luftkammer (11) ein Gaspolster 10 bildet.
